# FASCICULE DE BREVET EUROPEEN

(11) **EP 0 530 116 B1**
(45) Date de publication et mention de la délivrance du brevet: **06.11.1996**
(21) Numéro de dépôt: 92420269.0
(22) Date de dépôt: 05.08.1992
(51) Int. Cl.: B23B 31/16, B23B 31/20, B23B 31/40

(54) **Mandrin de serrage polyvalent pour machine-outil**
Polyvalenter Spannfutter für Werkzeugmaschine
Polyvalent chuck for machine tool

(30) Priorité: 12.08.1991 FR 9110386
(43) Date de publication de la demande: 03.03.1993
(73) Titulaire: GERARD GORSE EQUIPEMENTS DE MACHINES-OUTILS S.A., F-39570 Perrigny (FR)
(72) Inventeur: Gorse, Gérard, F-39000 Lons-le-Saunier (FR)
(74) Mandataire: Moinas, Michel

(56) Documents cités:
- DE-B- 1 284 251
- FR-A- 910 406
- GB-A- 1 131 092
- US-A- 2 757 008
- US-A- 4 403 782

## Description

La présente invention est relative à un mandrin de serrage polyvalent pour machine-outil, c'est-à-dire une pièce tournante contenant des mâchoires rétractables aptes à tenir une pièce à usiner de manière rigide en une position très précise. On connaît d'ores-et-déjà de nombreux types de mandrins répondant chacun à des usages spécifiques.

Une première famille de mandrin comprend un corps cylindrique dans la face frontale duquel sont guidés radialement deux, trois, quatre ou six "mors de serrage" concentriques. Grâce à leur conception, disposition et éventuellement par leur course importante, les mors de ces mandrins peuvent saisir des pièces volumineuses. Ces mandrins à mors se différencient selon le type d'entraînement prévu pour actionner radialement les mors à partir du déplacement axial d'un cylindre de commande interne concentrique dans le corps du mandrin.

Un premier type de mandrin à mors dit "à rampes", comme, par exemple, celui décrit dans le document FR-2 447 768, sur lequel est basé le préambule de la revendication 1, comprend un cylindre de commande que termine une noix présentant, en face de chaque mors, une rampe oblique orientée vers l'extérieur sous la forme d'une rainure en Té inversé, rampe dans laquelle est engagé le talon arrière du mors de base également sous la forme d'un Té. Le mors de base n'étant mobile que radialement dans la face frontale du corps du mandrin, on comprend aisément que, lors du retrait du cylindre de commande, la partie inférieure de la rampe de la noix vient abaisser le talon du mors. Dans le document FR-2 431 338 est décrit un dispositif de compensation de force centrifuge pour ce type de mandrin à rampes comprenant un levier situé à l'arrière et perpendiculairement au mors, une branche courte appuyant dans une encoche de la face arrière du mors, la branche plus longue étant tirée vers l'extérieur par une masselotte sous l'action de la force centrifuge.

Dans un deuxième type de mandrin à mors dit "à coulisseaux", tel que celui illustré dans le document EP-0 215 350, le mors de base est engagé sur un côté (ou sur les deux) par une liaison en tenon-et-mortaise oblique d'une pièce coulissant parallèlement à l'axe du mandrin, cette pièce étant actionnée par le cylindre de commande arrière au travers d'une liaison également en tenon-et-mortaise. Pour éviter des phénomènes de coincement, la liaison en tenon-et-mortaise pentue entre la pièce coulissante et le mors de base peut avoir une section trapézoïdale. En alternative, la liaison oblique mors/pièce coulissante peut être aussi réalisée par une série de dentures parallèles obliques s'interpénétrant.

Un autre type de mandrin à mors dit "à leviers", tel que celui commercialisé par la Société GAMET sous la référence "MX", comprend un levier pour chaque mors situé dans le plan radial passant par celui-ci, la petite branche étant engagée dans une encoche ménagée dans la face arrière du mors, la branche plus longue, à angle droit par rapport à la première, étant prise dans une encoche ménagée sur la face extérieure du cylindre de commande. Ainsi, par retrait du cylindre de commande, les petites branches sont amenées à s'abaisser rapprochant ainsi les mors. Avantageusement, l'un ou tous les leviers sont complétés, dans le prolongement de leur petite branche au-delà du pivot, par une masselotte confirmant le serrage du mors sous l'action de la force centrifuge.

Une seconde famille de mandrin dit "de serrage à pinces" tel que celui illustré dans le document EP-0-258 771 comprend plusieurs pinces en forme de segments de tronc de cône évidé, dont les surfaces externes coniques prennent appui dans une partie également conique fixe du corps du mandrin. Les extrémités de ces pinces sont munies de crochets pour pouvoir être tirées par le cylindre de commande vers l'intérieur de la partie conique fixe du mandrin. Ce type de mandrin est plus particulièrement congru pour l'usinage de pièces à partir de barres ou des pièces de dimension moyenne nécessitant un serrage uniforme sur une surface importante.

Une autre famille de mandrin dit "à entraînements frontaux" comprend un corps coaxial dont l'extrémité est garnie en son centre d'une pointe de centrage, et proche de cette pointe, d'une série de couteaux radiaux d'entraînement. La pointe de centrage peut être fixe et les couteaux d'entraînement sont alors mobiles entraînés par un vérin arrière, ou inversement. Avec un organe similaire en vis-à-vis, ces pièces sont prévues pour saisir par les faces latérales une pièce devant être usinée sur la totalité de sa surface externe. Fréquemment, ces mandrins sont montés sur un mandrin à mors, soit en étant fixés directement contre la face frontale plane par des boulons, soit en étant saisis par les mors eux-mêmes. Toutefois, le centrage de ce mandrin rapporté peut poser quelques difficultés, ce qui peut ralentir l'installation.

Une autre famille de mandrin dit "expansible" voir par example GB-A-1 131 092 comprend un corps rapporté contre la face frontale du mandrin et dont une partie externe peut s'élargir, ou une partie interne se rétrécir, sous l'action d'une pièce de commande déplacée ou d'une pression hydraulique, et ce pour saisir une pièce devant être travaillée sur sa surface extérieure.

Un premier type de mandrin expansible mécanique comprend un simple cône externe faisant partie intégrante du corps de base et par-dessus lequel est poussée, ou tirée selon le sens du cône, une pince fendue. On peut également envisager, à l'inverse, une pince fixe et un cône intérieur poussé ou tiré.

Un second type de mandrin expansible mécanique "à double cône" comprend une pince serrée entre une partie conique fixe d'un corps de base et une seconde partie conique mobile située à l'extrémité d'une tirette. Par traction sur la tirette, donc rapprochement des deux parties coniques l'une vers l'autre, il est possible de déplacer radialement les pinces, qui peuvent alors saisir une pièce creuse de l'intérieur pour usinage toujours sur la surface extérieure.

Un troisième type de mandrin expansible comprend, toujours dans un corps rapporté, une membrane élastique déformée par une pression hydraulique obtenue par déplacement d'un piston dans un cylindre intégré dans le corps rapporté, piston actionné manuellement ou automatiquement par un vérin.

Au vu de ce qui précède, on comprend qu'un atelier de mécanique amené à travailler de nombreuses petites séries de pièces différentes, comme par exemple le cas d'atelier de sous-traitance, doit nécessairement s'équiper en plusieurs types de mandrins, ce qui constitue déjà un investissement lourd.

De plus, le changement d'un type de mandrin à un autre est fréquemment long et fastidieux, augmentant d'autant les temps morts entre les productions. Or, il serait possible de laisser travailler des machines entièrement automatiques sans arrêts, même en l'absence d'opérateur pendant les pauses, celles-ci chargeant et déchargeant les pièces à usiner elles-mêmes pour autant qu'aucun réglage manuel ne soit plus nécessaire entre un travail en mors et un travail en pinces, ou vice versa.

Enfin, il convient également, à chaque changement de mandrin à mors, de régler la position du mors de serrage sur les mors de base, selon des modalités pouvant varier d'un fabricant de mandrins à l'autre.

Le but de la présente invention est d'obvier les problèmes précités grâce à un mandrin de base unique pouvant être transformé pour utilisation soit en serrage en mors, soit en pinces ou être complété en l'un des types de serrage à entraînement frontal ou expansible mentionnés précédemment. La conception d'un tel mandrin de base doit permettre d'effectuer ces modifications aisément, donc rapidement, et ce avec un minimum, si ce n'est une absence, de pièces intermédiaires.

Ces buts sont réalisés grâce à un mandrin à serrage polyvalent pour machine-outil comprenant un corps de mandrin cylindrique dans la face frontale duquel sont guidés radialement au moins deux mors de serrage pouvant être rapprochés ou écartés par des moyens d'entraînement à partir du retrait ou de l'avance axial d'un cylindre de commande interne concentrique du mandrin, du fait qu'il comprend des moyens de maintien supplémentaires, du fait que l'ouverture coaxiale frontale du mandrin présente une partie conique dont le sommet est orienté vers l'arrière, du fait que le cylindre de commande est muni en son extrémité frontale d'un organe de liaison pour des moyens de maintien supplémentaires rapportés prenant appui sur la partie conique de l'ouverture coaxiale et du fait que le mandrin comprend, de plus, des moyens de sélection de maximum de course du cylindre de commande. L'organe de liaison peut avantageusement être constitué d'une collerette d'accrochage orientée vers l'intérieur terminant l'extrémité du cylindre de commande.

Avantageusement, les moyens de sélection de maximum de course du cylindre de commande comprennent une pièce cylindrique installée dans un orifice radial du corps du mandrin, l'extrémité intérieure de la pièce portant une butée excentrée située à hauteur d'une butée en correspondance ménagée sur la face externe du cylindre de commande, ou sur la face externe d'un organe des moyens d'entraînement, l'extrémité extérieure de la pièce comprenant des moyens permettant de la tourner à volonté autour de son axe. Cette pièce peut être maintenue en position par une barre engagée dans une rainure transversale. La position angulaire de cette pièce peut être indexée par une bille poussée par des moyens de rappel s'engageant dans des encoches ménagées sur le pourtour en correspondance de la pièce.

Selon une première variante, les moyens de maintien supplémentaires sont des pinces de serrage internes en forme de segments longitudinaux de tronc de cône évidé dont les faces coniques externes viennent en appui contre la partie conique de l'ouverture frontale du mandrin, et dont les sommets sont munis d'un ou plusieurs éléments de liaison complémentaires à l'organe de liaison présent à l'extrémité du cylindre de commande. Avantageusement, les moyens de sélection sont alors en position de "course courte". Par exemple, les sommets des pinces de serrage internes peuvent être munis de crochets pris dans la collerette frontale en correspondance du cylindre de commande.

Selon une seconde variante de l'invention, les moyens de maintien supplémentaires est un entraîneur à pointes dont la face arrière présente une saillie conique venant se loger, pour centrage, dans la partie conique de l'ouverture frontale du mandrin, cet entraîneur étant fixé à la face frontale du mandrin par des boulons, des écrous, des brides ou tout autre moyen.

Selon une troisième variante, les moyens de maintien supplémentaires est un mandrin expansible mécanique comprenant une pince de serrage expansible à partir du retrait d'une tirette interne. Une partie conique de centrage de la face arrière du corps rapporté peut venir prendre appui dans la partie conique de l'ouverture frontale du mandrin. L'extrémité arrière de la tirette peut être solidaire d'une couronne de commande d'expansion munie de rainures en portion de spirale pilotant respectivement un pion protubérant hors d'un coulisseau mobile seulement dans le sens radial au sein d'un manchon de guidage voisin de la couronne. Ce manchon est maintenu proche de la couronne par une première liaison avec la tirette et retenu en rotation par une seconde liaison avec le corps rapporté fixe. Ainsi, par rotation imposée de la tirette, il est possible de faire sortir les coulisseaux pour les engager derrière un organe de liaison du cylindre de commande, par exemple une collerette d'accrochage présente à l'extrémité de ce cylindre de commande. Avantageusement, les moyens de sélection sont alors en position "course courte".

Lorsque les moyens d'entraînement des mors est de type "à rampes", la face externe du cylindre de commande présente en son extrémité arrière une liaison mécanique avec une noix cylindrique insérée par-dessus le cylindre, cette noix comportant, elle, devant chaque mors, une rampe en forme de rainure en Té inversé engagée par un tenon en Té situé à la base du mors correspondant. Avantageusement, la liaison mécanique entre le cylindre de commande et la noix est réalisée par filetage permettant un assemblage plus aisé.

Lorsque les moyens d'entraînement des mors est de type "à coulisseaux", l'un des coulisseaux au moins peut être bloqué en position de serrage par un levier situé dans un plan parallèle à la surface frontale, le bras long étant constitué d'une masselotte, le bras court prenant appui contre le coulisseau lorsque la masselotte est déviée par la force centrifuge induite par la rotation du mandrin.

Utilement, les mors de serrage rapportés sur les mors de base sont munis d'une butée de calage en position sous la forme d'une tige coudée engagée dans un orifice ou une rainure du mors de serrage, tige bloquée en position choisie au moyen d'une vis transversale.

L'invention sera mieux comprise à l'étude de modes de réalisation pris à titre d'exemples nullement limitatifs et décrits par les figures suivantes dans lesquelles :
- les figures 1a et 1b illustrent un mandrin "à rampes" selon l'invention, respectivement de front et en coupe selon la ligne I-I de la figure 1a,
- les figures 2a et 2b illustrent un mandrin "à leviers" selon l'invention respectivement de front et en coupe selon la ligne II-II de la figure 2a,
- les figures 3a et 3b illustrent un mandrin "à coulisseaux" selon l'invention respectivement en vue frontale et en coupe selon la ligne III-III de la figure 3a,
- la figure 4 illustre en coupe un mandrin expansible mécanique avec une adaptation spécialement conçue pour le mandrin de base selon l'invention,
- les figures 5a et 5b illustrent une première variante de calage de mors de serrage sur mors de base, et
- les figures 6a et 6b illustrent une seconde variante de calage de mors de serrage sur mors de base.

Dans ces dessins, les pièces ayant une fonction similaire, bien que de structure pouvant légèrement varier, sont désignées par des références identiques et mises en évidence par des hachures semblables. De plus, on définira par "frontale" une pièce orientée vers la sortie du mandrin où est serrée la pièce à usiner, et à l'inverse par "arrière" une pièce du mandrin proche de la machine-outil. De même, on définira par "intérieure" une partie de pièce orientée vers l'axe longitudinal du mandrin, et inversement par "extérieure" une pièce orientée radialement vers la périphérie du mandrin.

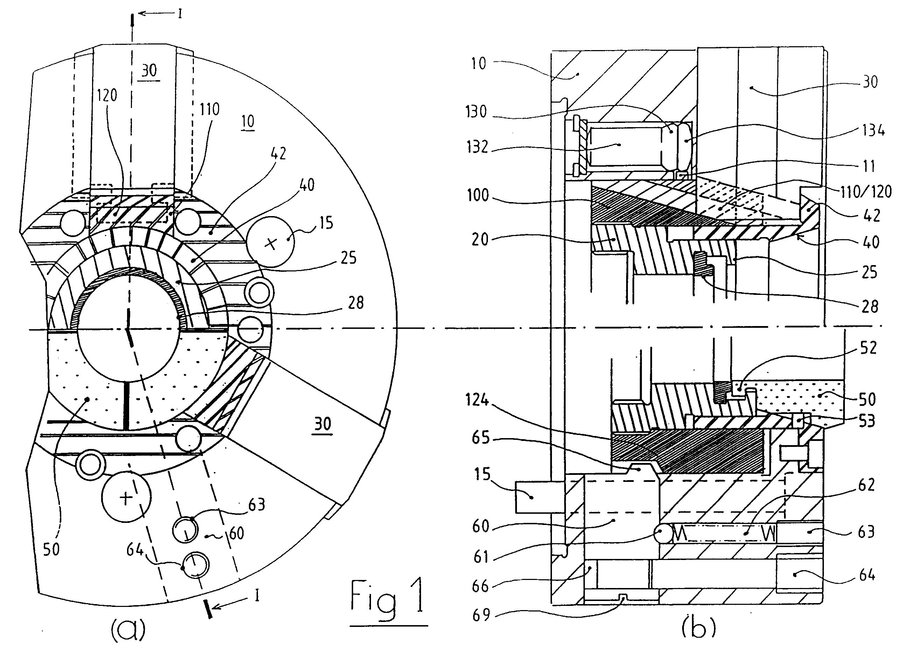

En référence aux figures 1a et 1b, le mandrin comprend un corps 10 généralement cylindrique fixé à la machine-outil par plusieurs boulons importants 15. Dans la face frontale sont taillées trois rainures radiales équidistantes ayant une section en Té dans lesquelles peuvent être déplacés radialement des mors de base 30. L'entrée de l'ouverture frontale concentrique du mandrin est garnie par la collerette externe d'une douille 42 dont la partie cylindrique pénètre jusqu'à environ la moitié du corps du mandrin. Plus particulièrement, cette douille 42 présente au niveau de cette entrée frontale une partie conique 40 dont le sommet est orienté vers l'intérieur du mandrin.

A l'intérieur de cette douille 42 est engagée l'extrémité frontale d'un cylindre de commande 20 dont le bord interne de l'extrémité arrière présente un filetage pour liaison avec une tige d'avancement ou de retrait venant de la machine-outil. L'extrémité frontale de ce cylindre de commande 60 est complétée par une collerette 25 orientée vers l'intérieur.

Comme on peut mieux l'observer sur la partie inférieure de la figure 1b, le corps de mandrin 10 est traversé par une pièce cylindrique 60 dont l'extrémité interne comprend une butée 65 excentrée. Cette pièce 60 est tenue en position au moyen d'une tige 64 dont une extrémité est filetée pour fixation dans le corps du mandrin et l'autre extrémité s'engage dans une rainure circulaire 66 ménagée dans la pièce 60. Par ailleurs, une bille 61, poussée par un ressort 62 venant en butée contre une vis de fermeture 63, maintient temporairement la position angulaire de la pièce cylindrique 60. La surface externe de cette pièce présente aussi une rainure 69 permettant de la tourner au moyen d'un tournevis, tout autre moyen tel que bouton pouvant également convenir. Comme on peut aisément le comprendre, la butée 65 se trouve plus ou moins en avant dans le corps du mandrin après rotation de cette pièce cylindrique 60 d'un demi-tour.

Ces pièces décrites précédemment constituent les parties de base du mandrin selon l'invention, c'est-à-dire les parties présentes en permanence quel que soit le type de serrage de mors ou la famille de mandrin utilisé.

Le mandrin à mors illustré sur les figures la et 1b comprend plus particulièrement une noix 100 engagée par-dessus le cylindre de commande 20 auquel elle est reliée par un filetage en sa partie arrière. D'autres liaisons mécaniques, comme, par exemple, au moyen de goupilles, peuvent être également envisagées. Cette noix 100 présente, vis-à-vis de chaque mors de base 30, une rampe oblique 110 de section en Té inversé. Dans ces rampes obliques sont respectivement engagés les talons 120, également en Té, des mors de base 30.

Au dessus de la noix 100 est installé un dispositif de compensation de force centrifuge sous la forme d'un levier 130 sensiblement rectiligne orienté parallèlement à l'axe du mandrin, la branche arrière 132 constituant une masselotte, la proéminence avant arrondie 134 constituant le bras d'appui sur la noix 100 au travers d'une partie fendue 11 du corps de mandrin 10. La masselotte 132 est accessible par l'arrière en enlevant une plaque retenue par un serre-clip.

Dans cette configuration, la butée limite de course 65 agit contre un épaulement 124 ménagé en correspondance sur la périphérie de la noix 100.

Pour un usage du type "serrage à pinces", on rapporte des pinces 50 en engageant au préalable leurs crochets d'extrémité 52 derrière la couronne 25, puis en installant la surface externe conique de cette pince contre la partie conique 40 de la douille 42. Alors, le retrait du cylindre de commande 20 provoque la montée de la pince 50 le long de la partie conique 40 créant ainsi le serrage concentrique sur tout le long de la surface interne. Une goupille 53 assure la liaison en rotation entre le corps de mandrin menant et les pinces entraînées. Cette goupille pourrait être remplacée par des rainures complémentaires parallèles à l'axe du mandrin présentes à la fois sur les surfaces extérieures des pinces et la partie conique 40. Si désiré, on installe au préalable un joint anti-copeaux 28 derrière la couronne 25.

La liaison entre le cylindre de commande 20 et les pinces 50 peut se faire aussi par d'autres modes d'accrochage tels que des crochets dans des lumières ou des dispositifs à baïonnettes ou par des filetages.

Un entraîneur frontal à pointes utilisé avec le mandrin selon l'invention est, de préférence, complété d'une saillie conique sur sa face arrière permettant de mettre à profit la partie conique 40 pour le centrer avant fixation. La fixation de cet entraîneur est la plus fréquemment réalisée au moyen de boulons pénétrant dans la face frontale, mais peut également être effectuée par saisie par des brides fixées sur la face frontale ou par d'autres moyens. En relation avec le mandrin selon l'invention, on peut aussi concevoir une extension arrière de l'entraîneur muni en extrémité de languettes radiales rétractables pouvant être engagées à volonté derrière la collerette 25 une fois cette extension insérée dans le corps du mandrin.

Si une fonction de traction n'est pas nécessaire pour la tenue de l'entraîneur, le cylindre de commande 20 peut être employé comme poussoir pour la pointe ou les couteaux mobiles axialement.

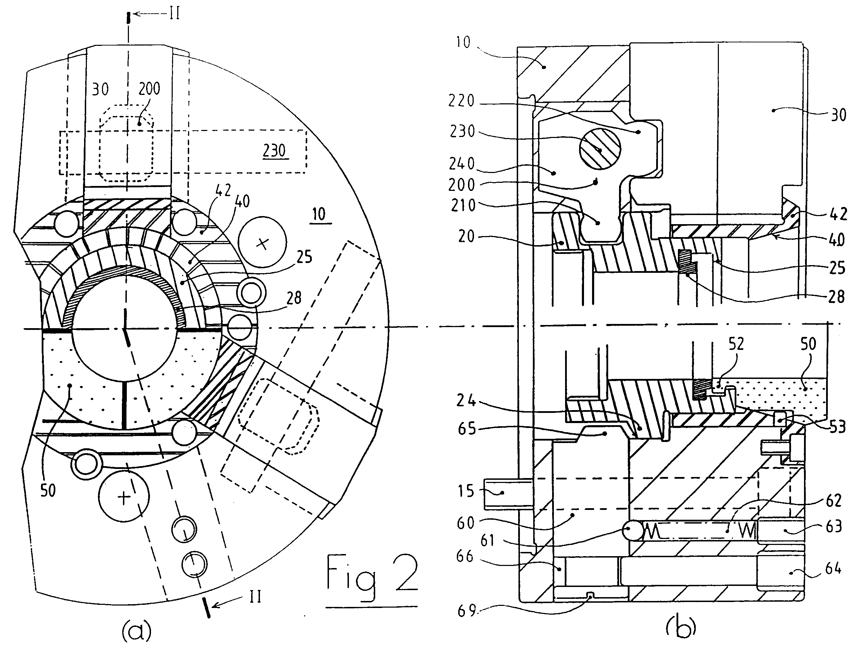

Sur les figures 2a et 2b, on reconnaît d'abord les parties fondamentales à savoir : le corps de mandrin 10 dont l'ouverture frontale est garnie de la douille 42 avec sa partie conique 40, le cylindre de commande 20 terminé par la collerette frontale 25, ainsi que les dispositifs de sélection de la position de la butée 65 de limitation de course du cylindre 20.

Par contre, le rapprochement des mors de base 30 se fait ici au moyen d'un levier 200 pivotant autour d'un axe 230, le bras court 220 étant pris dans une encoche ménagée dans la face arrière du mors 30, le bras 210 étant pris dans une rainure circulaire du cylindre de commande 20. Pour compenser les efforts de desserrage dûs à la force centrifuge, il est prévu une masselotte 240 à l'arrière du levier 200.

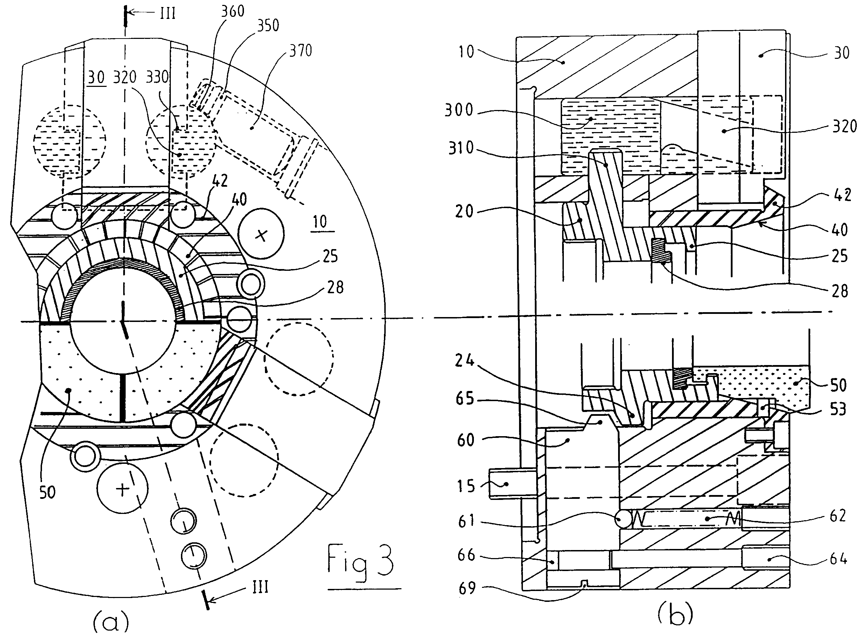

En référence aux figures 3a et 3b, le rapprochement d'un mors de base 30 se fait au moyen d'un coulisseau 300 dont un tenon 320 latéral oblique pénètre dans une rainure en correspondance 330 de la face latérale de ce mors de base 30. Le cylindre de commande 20 est par ailleurs relié à la base intérieure des coulisseaux 300 par des tenons 310 pénétrant dans des rainures en correspondance.

De manière plus particulière, le dispositif de compensation de la force centrifuge comprend ici un levier 350 disposé dans le plan du mandrin à hauteur de la liaison tenon-rainure 310. Comme on peut aisément le comprendre, la force centrifuge tend à écarter radialement la masselotte 370 provoquant ainsi l'appui du bras court 360, donc le coincement du coulisseau correspondant 300 en position.

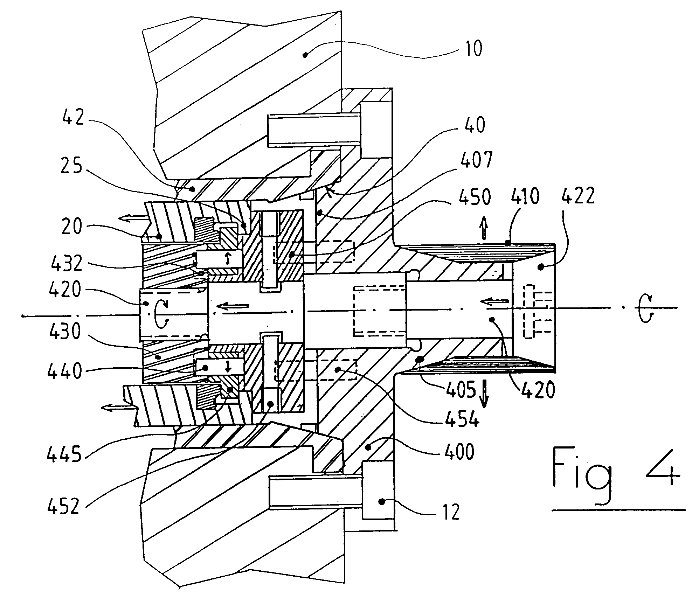

Sur la figure 4 est illustré un mandrin à pinces expansibles à double cône comprenant d'abord un corps rapporté 400 plaqué contre la face frontale du corps de mandrin 10 et centré grâce à une partie saillante 407 conique de la face arrière venant s'installer dans la partie conique 40 de la douille 42. Ce corps rapporté 400 est fixé au corps du mandrin par une série de boulons 12 ou tout autre moyen usuel. La face frontale du corps rapporté 400 présente une première partie conique 405 prolongée par une partie cylindrique par-dessus laquelle sont installées les pinces de serrage expansibles 410. Ces pinces de serrage sont maintenues en position par l'extrémité conique 422 d'une tirette 420 traversant tout le corps rapporté 400 et dont l'extrémité arrière arrive au niveau du cylindre de commande 20.

L'extrémité arrière de cette tirette 420 est solidaire d'une couronne 430 par un filetage, ou éventuellement une goupille. Cette couronne 430 présente sur sa face frontale des rainures en portions de spirale. Immédiatement à la suite de cette couronne se trouve un manchon 450 relié à la tirette 420 par des vis 452 pénétrant dans des rainures. Toutefois, le manchon 450 est immobilisé en rotation par des goupilles 454 ancrées dans le corps rapporté 400. Dans la face arrière de ce manchon sont ménagées plusieurs rainures radiales où sont logés des coulisseaux 445 traversés par des pions 440, ces pions pénétrant dans les rainures en portions de spirale 432.

Comme on peut aisément le comprendre, on insère la partie arrière du mandrin à expansion dans le mandrin de base jusqu'à plaquer le corps rapporté 400 contre la surface frontale sur laquelle il est vissé. On fait alors tourner la tirette sur elle-même ce qui, par rotation de la couronne 430, provoque le déplacement vers l'extérieur des coulisseaux qui viennent s'engager derrière la collerette 25 du tiroir de commande 20. Cette rotation de la tirette peut être effectuée par exemple au moyen d'une clé à six pans insérée dans un orifice hexagonal ménagé à l'extrémité frontale de cette tirette. Le retrait du cylindre de commande 20 entraîne alors le retrait de la tirette 420 au travers des coulisseaux et de la couronne, ce qui provoque la sortie des pinces 410 par pincement entre les deux parties coniques opposées 405 et 422.

Le principe du dispositif d'adaptation décrit précédemment convient également pour d'autres mandrins à simple cône avec pinces (ou cône) d'extrémités tirées. Pour des mandrins à cônes (ou à pinces) poussés, on peut par contre directement utiliser le cylindre de commande 20 muni d'un embout adapté pour effectuer l'avance de la pièce. Comme précédemment, le corps de ces mandrins reste toujours bien centré par rapport au mandrin de base grâce à la partie conique de la douille 42.

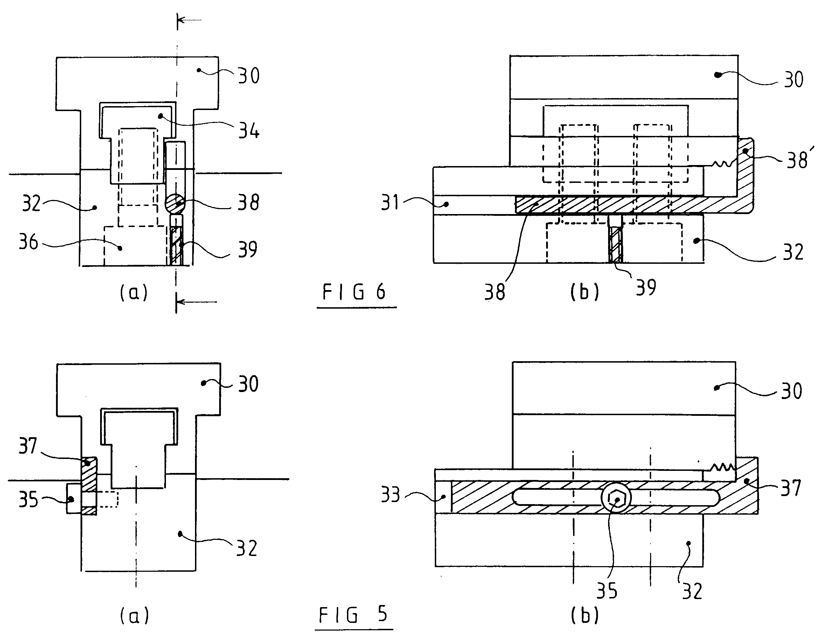

Sur les figures 5 et 6 sont illustrés des modes d'accrochage de mors de serrage 32 sur un mors de base 30 au travers d'une pièce intermédiaire 34 recevant des boulons de serrage. Afin de faciliter le positionnement exact du mors de serrage par rapport au mors de base, il est prévu, dans le mors de serrage, l'adjonction d'une butée réglable.

Comme illustré sur les figures 5, la butée 37 peut être située à l'extrémité d'une tige de section rectangulaire installée dans une rainure latérale, laquelle tige est immobilisée au moyen d'une vis 35. En alternative et comme illustré sur les figures 6, la butée 38' sous la forme d'une barre ou d'un disque est montée à l'extrémité d'une tige circulaire 38 insérée dans un orifice en correspondance 31 et bloquée par une vis transversale 39.

Comme on a pu le constater à la lecture de cet exposé, le mandrin selon l'invention permet, grâce à ce cylindre de commande 20 de forme particulière et partie conique à l'entrée frontale, de réaliser plusieurs modes de serrage sur ce même mandrin. De nombreuses améliorations peuvent être apportées à ce mandrin dans le cadre de cette invention.

## Revendications

1. Mandrin à serrage polyvalent pour machine-outil comprenant un corps de mandrin (10) cylindrique dans la face frontale duquel sont guidés radialement au moins deux mors de serrage (30) pouvant être rapprochés ou écartés par des moyens d'entraînement (100,110,130) à partir du retrait ou de l'avance axial d'un cylindre de commande (20) interne concentrique du mandrin, caractérisé en ce qu'il comprend des moyens de maintien (50) supplémentaires, en ce que l'ouverture coaxiale frontale du mandrin présente une partie conique (40) dont le sommet est orienté vers l'arrière ; en ce que le cylindre de commande (20) est muni en son extrémité frontale d'un organe de liaison pour des moyens de maintien (50) supplémentaires rapportés prenant appui sur la partie conique de l'ouverture coaxiale ; et en ce que le mandrin comprend, de plus, des moyens de sélection (60-65) de maximum de course du cylindre de commande (20).

2. Mandrin à serrage polyvalent pour machine-outil selon la revendication 1, caractérisé en ce que l'organe de liaison pour des moyens de maintien supplémentaires rapportés comprend une collerette d'accrochage (25) orientée vers l'intérieur terminant l'extrémité du cylindre de commande.

3. Mandrin à serrage polyvalent pour machine-outil selon la revendication 1, caractérisé en ce que les moyens de sélection de maximum de course du cylindre de commande comprennent une pièce cylindrique (60) installée dans un orifice radial du corps de mandrin (10), l'extrémité intérieure de la pièce portant une butée excentrée (65) située à hauteur d'une butée (24,124) en correspondance ménagée sur la face externe du cylindre (20) ou d'un organe (100) des moyens d'entraînement, l'extrémité extérieure de la pièce comprenant des moyens (69) permettant de la tourner à volonté autour de son axe, cette pièce (60) étant maintenue en position par une barre (64) engagée dans une rainure transversale (66), sa position angulaire étant indexée par une bille (61) poussée par des moyens de rappel (62) s'engageant dans des encoches ménagées sur le pourtour en correspondance sur la pièce.

4. Mandrin à serrage polyvalent selon la revendication 1 ou 2, caractérisé en ce que les moyens de maintien supplémentaires sont des pinces de serrage internes (50) en forme de portions longitudinales de tronc de cône évidé dont les faces coniques externes viennent en appui contre la partie conique (40) de l'ouverture frontale du mandrin, et dont les sommets sont munis d'un ou plusieurs éléments de liaison (52) complémentaires à l'organe de liaison (25) présent à l'extrémité du cylindre de commande (20), et en ce que les moyens de sélection sont en position de "course courte".

5. Mandrin à serrage polyvalent selon la revendication 1 ou 2, caractérisé en ce que les moyens de maintien supplémentaires est un entraîneur frontal à pointes dont la face arrière présente une saillie conique venant se loger, pour centrage, dans la partie conique (40) de l'ouverture frontale du mandrin, cet entraîneur étant fixé à la face frontale du mandrin.

6. Mandrin à serrage polyvalent selon la revendication 1 ou 2, caractérisé en ce que les moyens de maintien supplémentaires est un mandrin mécanique expansible à partir du retrait d'une tirette interne dont l'extrémité arrière peut être accrochée à volonté dans l'organe de liaison (25) du cylindre de commande (20) grâce à des moyens de liaison rétractables (430-454) ; en ce qu'une partie conique de centrage (407) de la face arrière du corps rapporté (400) vient prendre appui dans la partie conique (40) de l'ouverture frontale du mandrin ; et en ce que les moyens de sélection sont en position "course courte".

7. Mandrin à serrage polyvalent selon les revendications 2 et 5, caractérisé en ce que les moyens de liaison rétractables comprennent une couronne de commande d'expansion (430) solidaire de l'extrémité arrière de la tirette (420) mobile en rotation et munie de rainures en spirale (432) pilotant respectivement un pion (440) protubérant hors d'un coulisseau (445) mobile seulement dans le sens radial au sein d'un manchon de guidage (450) voisin de la couronne (430) et relié au corps rapporté fixe (400), coulisseaux (445) venant s'engager, en position sortie, derrière la collerette d'accrochage (25) du cylindre de commande (20).

8. Mandrin à serrage polyvalent pour machine-outil selon la revendication 1 ou 2, caractérisé en ce que les moyens d'entraînement des mors est de type "à rampes", la face externe du cylindre de commande (20) présentant en son extrémité arrière une liaison mécanique avec une noix cylindrique (100) insérée par-dessus le cylindre, cette noix comportant, devant chaque mors, une rampe (110) en forme de rainure en Té inversé engagée par un tenon (130) en Té situé à la base du mors (30) correspondant.

9. Mandrin à serrage polyvalent pour machine-outil selon la revendication 7, caractérisé en ce que la liaison mécanique entre le cylindre de commande et la noix est réalisée par filetage (105).

10. Mandrin à serrage polyvalent pour machine-outil selon la revendication 1, caractérisé en ce que les moyens d'entraînement des mors est de type "à leviers".

11. Mandrin à serrage polyvalent pour machine-outil selon la revendication 1, caractérisé en ce que les moyens d'entraînement des mors est de type "à coulisseaux", l'un des coulisseaux (300) au moins étant bloqué en position de serrage par un levier (350) situé dans un plan parallèle à la surface frontale, le bras long étant constitué d'une masselotte (370), le bras court (360) prenant appui contre le coulisseau (300) lorsque la masselotte est déviée par la force centrifuge induite par la rotation du mandrin.

12. Mandrin à serrage polyvalent pour machine-outil selon la revendication 1 ou 2, caractérisé en ce que les mors de serrage (32) rapportés sur les mors de base (30) sont munis d'une butée de calage en position sous la forme d'une tige coudée (37,38) engagée dans un orifice (31,33) du mors de serrage, et bloquée en position choisie au moyen d'une vis transversale (35,39).

## Claims

1. A polyvalent clamp chuck for machine-tools comprising a cylindrical chuck body (10) in the front face of which are radially guided at least two gripping jaws (30) that can be brought together or separated by drive means (100,110,130) by the axial withdrawal or advance of an internal control cylinder (20) concentric with the chuck, characterised in that it comprises additional support means, in that the coaxial front opening of the chuck has a conical part (40) whose summit is oriented rearwards; in that the control cylinder (20) is provided at its front end with a connector member for additional fitted support means (50) coacting with the conical part of the front opening; and in that the chuck further comprises means (60-65) for selecting the maximum amplitude of displacement of the control cylinder (20).

2. A polyvalent clamp chuck for machine-tools according to claim 1, characterised in that the connector member for the additional fitted support means comprises an inwardly-directed hook-shaped flange (25) that terminates the end of the control cylinder.

3. A polyvalent clamp chuck for machine-tools according to claim 1, characterised in that the means for selecting the maximum path of the control cylinder comprise a cylindrical part (60) fitted in a radial orifice of the chuck body (10), the inner end of said part carrying an eccentric abutment (65) situated at the level of a corresponding abutment (24,124) provided in the external face of the cylinder (20) or on the external face of a member (100) of the drive means, the outer end of said part comprising means (69) enabling it to be turned at will about its axis, said part (60) being held in position by a bar (64) engaged in a transversal groove (66), its angular position being indexed by a ball (61) pushed by biasing means (62) engaging in corresponding recesses provided on the periphery of said part.

4. A polyvalent clamp chuck for machine-tools according to claim 1 or 2, characterised in that the additional support means are internal gripping pincers (50) in the form of longitudinal portions of a truncated hollow cone whose external conical faces come to bear against the conical part (40) of the chuck's front opening, and whose summits are provided with one or more additional elements (52) for connecting with the connector member (25) located at the end of the control cylinder (29), and in that the selection means are set for a minimum displacement.

5. A polyvalent clamp chuck for machine-tools according to claim 1 or 2, characterised in that the additional support means is a point-type front drive whose rear face has a conical protuberance which for centering comes to be lodged in the conical part (40) of the chuck's front opening, this drive being fixed to the front face of the chuck.

6. A polyvalent clamp chuck for machine-tools according to claim 1 or 2, characterised in that the additional support means is a mechanical chuck expansible by withdrawal of an inner pull-piece whose rear end can be hookably engaged at will in the connector member (25) of the control cylinder (20) by means of retractable connector means (430-454); in that a conical centering part (407) of the rear face of a fitted body (400) comes to bear in the conical part (40) of the chuck's front opening; and in that the selection means are set for a minimum displacement.

7. A polyvalent clamp chuck for machine-tools according to claims 2 and 5, characterised in that the retractable connection means comprise an expansible control crown (430) solidly fixed with the rear end of a pull-piece (420) mobile in rotation and provided with spiral grooves (432) respectively piloting a pin (440) protruding from a slide (445) mobile only in the radial direction in a guide coupling sleeve (450) adjacent the crown (430) and connected to a fitted fixed body (400), and slides (445) which in the "out" position come to engage behind the hook-like flange (25) of the control cylinder (20).

8. A polyvalent clamp chuck for machine-tools according to claim 1 or 2, characterised in that the means for driving the jaws is of the "wedge" type, the external face of the control cylinder (20) having at its rear end a mechanical connection with a cylindrical ring (100) inserted about the cylinder, said ring having, in front of each jaw, a ramp (110) in the shape of an inverted T groove receiving therein a T-shaped tenon (130) situated on the base of the corresponding jaw (30).

9. A polyvalent clamp chuck for machine-tools according to claim 7, characterised in that the mechanical connection between the control cylinder and the ring is provided by a threading (105).

10. A polyvalent clamp chuck for machine-tools according to claim 1, characterised in that the jaw drive means is of the lever type.

11. A polyvalent clamp chuck for machine-tools according to claim 1, characterised in that the jaw drive means is of the sliding block type, at least one of the sliding blocks (300) being locked in the gripping position by a lever (350) situated in a plane parallel to the front surface, the lever having a long arm formed as an inertia block (370), and a short arm bearing against the sliding block (300) when the inertia block is deviated by centrifugal force produced by rotation of the chuck.

12. A polyvalent clamp chuck for machine-tools according to claim 1 or 2, characterised in that the gripping jaws (32) fitted on the main jaws (30) are provided with an abutment for locking them in position in the form of an elbow rod (37,38) engaged in an orifice (31,33) of the gripping jaw, and locked in a selected position by means of a transverse screw (35,39).

## Patentansprüche

1. Polyvalentes Spannfutter für eine Werkzeugmaschine mit einem zylindrischen Bohrfutterkörper (10), in dessen Vorderseite mindestens zwei Spannbacken (30) radial geführt werden, die durch Mitnahmeelemente (100, 110, 130) zueinander geführt oder auseinander bewegt werden können, die von der axialen Rückwärts- oder Vorwärtsbewegung eines inneren und konzentrisch zum Spannfutter angeordneten Steuerzylinders (20) betätigt werden, **dadurch gekennzeichnet,** daß zusätzliche Haltemittel (50) vorgesehen sind, daß die koaxiale vordere Öffnung des Spannfutters einen konischen Abschnitt (40) aufweist, dessen Spitze nach hinten ausgerichtet ist, daß der Steuerzylinder (20) an seinem vorderen Ende über ein Verbindungselement für die zusätzlichen angesetzten Haltemittel (50) verfügt, die sich auf dem konischen Abschnitt der koaxialen Öffnung abstützen, und daß das Spannfutter darüber hinaus Auswahlmittel (60-65) für die Festlegung des maximalen Weges des Steuerzylinders (20) umfaßt.

2. Polyvalentes Spannfutter für eine Werkzeugmaschine nach Anspruch 1, dadurch gekennzeichnet, daß das Verbindungselement für die zusätzlichen angesetzten Haltemittel einen nach innen gerichteten Anschlagkragen (25) umfaßt, der das Ende des Steuerzylinders abschließt.

3. Polyvalentes Spannfutter für eine Werkzeugmaschine nach Anspruch 1, dadurch gekennzeichnet, daß die Auswahlmittel für die Festlegung des maximalen Weges des Steuerzylinders ein Zylinderelement (60) umfassen, das in einer radialen Öffnung des Spannfutterkörpers (10) vorgesehen ist, daß das innere Ende des Elementes einen exzentrisch angeordneten Anschlag (65) aufweist, der in der Höhe eines komplementären Anschlages (24, 124) angeordnet ist, der auf der Außenseite des Zylinders (20) oder eines Mittels (100) der Mitnahmemittel vorgesehen ist, daß das äußere Ende des Elementes über Mittel (69) verfügt, die es gestatten, es beliebig um seine Achse zu drehen, wobei dieses Element (60) an seiner Position durch einen Stab (64) festgehalten wird, der in einer transversalen Nut (66) eingreift, wobei seine Winkelposition durch eine Kugel (64) indiziert festgelegt wird, die von Rückführungsmitteln (62) so gedrückt wird, daß sie in Ausnehmungen eingreift, die auf dem entsprechenden Umkreis auf dem Element vorgesehen sind.

4. Polyvalentes Spannfutter nach Anspruch 1 oder 2, dadurch gekennzeichnet, daß die zusätzlichen Haltemittel innere Halteklammern (50) in Gestalt von longitudinalen Abschnitten von hohlen Kegelstümpfen sind, deren äußere konische Seiten sieh auf dem konischen Abschnitt (40) der vorderen Öffnung des Spannfutters abstützen und deren Kegelspitzen mit einem oder mehreren Verbindungsmitteln (52) versehen sind, die zu dem an dem Ende des Steuerzylinders (20) vorgesehenen Verbindungsmitteln (25) komplementär sind, und daß die Auswahlmittel in der Position des "kurzen Weges" sind.

5. Polyvalentes Spannfutter nach Anspruch 1 oder 2, dadurch gekennzeichnet, daß das zusätzliche Haltemittel ein vorderseitiger Punktmitnehmer ist, dessen hintere Seite eine konische Ausnehmung aufweist, die sich zur Zentrierung in den konischen Abschnitt (40) der vorderen Öffnung des Spannfutters einpaßt, wobei dieser Mitnehmer an der vorderen Seite des Spannfutters befestigt ist.

6. Polyvalentes Spannfutter nach Anspruch 1 oder 2, dadurch gekennzeichnet, daß das zusätzliche Haltemittel ein Futter ist, das durch eine Rückwärtsbewegung einer inneren Zugschnur mechanisch zu öffnen ist, dessen hinteres Ende beliebig in dem Verbindungsmittel (25) des Steuerzylinders (20) mit Hilfe von Einzugsmitteln (430-454) eingehängt werden kann, daß sich ein konischer Zentrierabschnitt (407) der Rückseite des angesetzten Elementes (400) auf dem konischen Abschnitt (40) der vorderen Öffnung des Futters abstützt und daß die Auswahlmittel in der Position des "kurzen Weges" sind.

7. Polyvalentes Spannfutter nach Anspruch 2 und 5, dadurch gekennzeichnet, daß die einziehbaren Verbindungsmittel einen Steuerkranz (430) aufweisen, der mit dem hinteren Ende der Zugschnur (420) formschlüssig und drehbar verbunden ist und mit Spiralnuten (432) versehen ist, die jeweils einen Stift (440) steuern, der sich aus einem beweglichen Schlitten (445) heraus erstreckt, der lediglich in radialer Richtung mit Hilfe einer Führungshülse (450) beweglich ist, die benachbart zu dem Kranz (430) angeordnet und mit dem festen Ansatzkörper (400) verbunden ist, und daß die Schlitten (445) in der Ausgangsposition hinter dem Anschlagkragen (25) des Steuerzylinders (20) eingreifen.

8. Polyvalentes Spannfutter für eine Werkzeugmaschine nach Anspruch 1 oder 2, dadurch gekennzeichnet, daß die Mitnahmeelemente der Spannbacken vom Rampentyp sind, wobei die Außenseite des Steuerzylinders (20) an seinem hinteren Ende eine mechanische Verbindung mit einem zylindrischen Anlauf (100) aufweist, der über den Zylinder eingeschoben ist, und daß dieser Anlauf vor jeder Backe über eine Rampe (110) in Gestalt einer inversen T-Nut verfügt, in die ein Positionierstein (130) in Gestalt eines T an der Basis jeder zugehörigen Spannbacke (30) eingreift.

9. Polyvalentes Spannfutter für eine Werkzeugmaschine nach Anspruch 7, dadurch gekennzeichnet, daß das Verbindungsmittel zwischen dem Steuerzylinder und dem Anlauf durch ein Gewinde (105) realisiert ist.

10. Polyvalentes Spannfutter für eine Werkzeugmaschine nach Anspruch 1, dadurch gekennzeichnet, daß die Mitnahmeelemente der Spannbacken vom Hebeltyp sind.

11. Polyvalentes Spannfutter für eine Werkzeugmaschine nach Anspruch 1, dadurch gekennzeichnet, daß die Mitnahmeelemente der Spannbacken vom Schlittentyp sind, wobei mindestens einer der Schlitten (300) in der Halteposition mit einem Hebel (350) blockiert ist, der sich in einer Ebene befindet, die parallel zu der Vorderseite ausgerichtet ist, dessen langer Arm aus einem Zapfen (370) besteht und dessen kurzer Arm (360) sich auf dem Schlitten (300) abstützt, wenn der Zapfen durch die durch die Drehung des Spannfutters erzeugte Zentrifugalkraft abgelenkt wird.

12. Polyvalentes Spannfutter für eine Werkzeugmaschine nach Anspruch 1 oder 2, dadurch gekennzeichnet, daß die Spannbacken (32), die sich auf die Basisbacken (30) beziehen, über einen Einstellanschlag verfügen, der die Gestalt einer Winkelleiste (37, 38) aufweist, die in eine Öffnung (31, 33) der Spannbacke eingreift und die in der gewählten Position durch eine transversale Schraube (35, 39) gehalten wird.
